Europäisches Patentamt

European Patent Office

Office européen des brevets

(19)

(11) **EP 0 798 483 B1**

(12) **FASCICULE DE BREVET EUROPEEN**

(45) Date de publication et mention
de la délivrance du brevet:
**09.01.2002  Bulletin 2002/02**

(51) Int Cl.⁷: **F16F 1/12**, F16K 3/24

(21) Numéro de dépôt: **97400693.4**

(22) Date de dépôt: **27.03.1997**

(54) **Dispositif pour rattraper les défauts d'orientation de l'effort produit par un ressort hélicoidal sur un piston coulissant dans un fourreau**

Vorrichtung zum Kompensieren von Kraftrichtungsfehlern einer Schraubenfeder auf einem in einer Laufbahn gleitenden Kolben

Device for correcting force orientation errors of a helical spring acting on a piston sliding in a bore

(84) Etats contractants désignés:
**DE FR GB**

(30) Priorité: **28.03.1996  FR 9603855**

(43) Date de publication de la demande:
**01.10.1997   Bulletin 1997/40**

(73) Titulaire: **SNECMA MOTEURS**
**75015 Paris (FR)**

(72) Inventeurs:
 • **Brocard, Jean-Marie**
  **77950 Rubelles (FR)**
 • **Lacour, Christian**
  **92170 Vanves (FR)**
 • **Lechevalier, Michel Marie André Albert**
  **77720 Bombon (FR)**

(56) Documents cités:
  **EP-A- 0 015 118**      **EP-A- 0 128 749**
  **DE-B- 1 212 789**      **FR-A- 1 150 075**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne un dispositif pour rattraper les défauts d'orientation de l'effort produit par un ressort hélicoïdal dans un ensemble comportant un fourreau et un piston monté coulissant dans ledit fourreau, ledit ressort hélicoïdal étant disposé coaxialement audit piston et exerçant par ses bases des efforts sensiblement opposés respectivement sur ledit fourreau et ledit piston.

La présence de tels ensembles est très courante dans les systèmes hydrauliques de distribution de fluides ou de calcul hydromécanique. Cest en particulier le cas des équipements composant les systèmes de régulation et de distribution de carburant qui équipent les turbomachines aéronautiques.

Les états de surface des parties en contact sur le piston et le fourreau sont d'excellente qualité pour éviter le grippage des pièces et réduire au mieux les efforts de frottement. Quant aux jeux fonctionnels entre ces fourreaux et ces pistons, ils sont extrêmement réduits et de l'ordre de quelques micromètres.

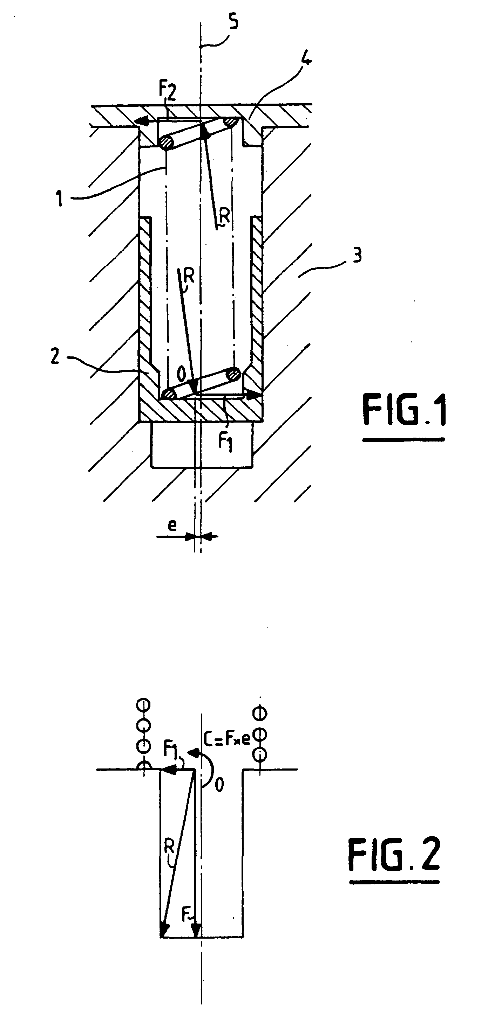

Cependant, comme le montrent les figures 1 et 2, l'effort R appliqué par le ressort 1 sur le piston 2 et le fourreau 3 ne passe pas par le centre 0 de la face d'appui correspondant et n'est pas perpendiculaire aux surfaces d'appui.

Ceci résulte du fait que les bases du ressort hélicoïdal sont en appui sur des surfaces du piston et du fourreau perpendiculaires à l'axe de déplacement du piston, par l'intermédiaire de coupelles. Les défauts d'usinage et les déformations du ressort entraînent une répartition non uniforme des efforts sur les coupelles.

Une composante latérale F1, F2 va naître au niveau du fourreau et du piston, ainsi qu'un couple C de basculement, par suite de l'écart e entre le centre de la face d'appui et le point d'application de l'effort R sur cette face d'appui. Cet effort F1 et le couple C plaquent le piston 2 contre l'alésage du fourreau 3 faisant ainsi croître la valeur de l'effort de frottement entre ces pièces et pouvant à terme provoquer une immobilisation par grippage, ce qui peut être particulièrement gênant à bord d'un aéronef en vol.

Le but de la présente invention est de réduire, voire éliminer l'effort F2 et le couple C.

Dans le cas idéal d'une rotule sans frottement, les réactions d'appui des portions de surface sphériques en contact réciproques sont toujours perpendiculaires au profil et sont de valeurs identiques. Ces réactions ont donc comme supports les rayons de la sphère constituant la partie mâle de la rotule et aboutissent toutes au centre de cette sphère. L'effet de la rotule est alors de garantir que la résultante R des réactions d'appui passe par le centre de la sphère, et qu'à cet endroit le couple transmis est nul.

Dans le cas d'une rotule avec frottement, la rotule peut transmettre un couple non nul, mais l'avantage du montage proposé par l'invention est de maîtriser par construction sa valeur maximale possible en choisissant une rotule ayant un rayon aussi faible que possible en fonction des objectifs et des contraintes de l'application. En effet, la valeur maximale du couple C est donnée par la formule

$$C = fxr \times R$$

dans laquelle :

f est le coefficient de frottement
r est le rayon de la rotule
R est la valeur de la force résultante.

Avantageusement, le ressort hélicoïdal est sur appui sphérique rotulant à ses deux extrémités. Cette disposition permet d'annuler l'effort latéral F1.

Dans le cas où il n'existe qu'un seul appui rotulant, l'effort latéral F1 existe et son intensité dépend de la qualité de la perpendicularité de la face d'appui opposée du ressort.

Pour FR-A-1 150 075, on connaît en outre un dispositif de rattrapage des défauts d'orientation de l'effort produit par un ressort hélicoïdal dans un ensemble hydraulique de distribution de fluide comportant un fourreau et un piston monté coulissant dans ledit fourreau, ledit ressort étant disposé coaxialement audit piston et exerçant par ses bases des efforts sensiblement opposés respectivement sur ledit fourreau et ledit piston. Une liaison rotulante sphérique centrée sur l'axe du piston est prévue entre la base du ressort hélicoïdal agissant sur le piston et le piston, la liaison rotulante comportant une rotule mâle montée sur une tige solidaire du piston et un anneau ayant une surface sphérique en appui sur la surface périphérique de ladite rotule mâle.

Selon l'invention, un dispositif du type précité est caractérisé en ce que l'anneau est monté sur ladite base du ressort au moyen d'une coupelle annulaire, formant le logement pour ladite base du ressort hélocoïdal, et d'une pièce de calage, portant ledit anneau, pour le réglage de la précontrainte du ressort hélicoïdal.

D'autres avantages et caractéristiques de l'invention ressortiront à la lecture de la description suivante faite à titre d'exemple et en référence aux dessins annexés dans lesquels :

La figure 1 montre un ensemble traditionnel comportant un fourreau et un piston monté coulissant dans ledit fourreau et chargé par un ressort hélicoïdal en appui sur des surfaces planes sensiblement perpendiculaires à l'axe du piston.

La figure 2 est une représentation équivalente des forces et couples en présence au niveau d'une surface d'appui ;

la figure 3 représente un système hydraulique de distribution de fluide incluant un ensemble comportant un fourreau et un piston monté coulissant et chargé par un ressort hélicoïdal, ledit ressort étant relié au piston par un dispositif rotulant permettant de compenser les efforts inégaux exercés par le ressort sur le piston ;

la figure 4 est une vue de dessus de la tête de piston ;

la figure 5 est une vue latérale de la tête de piston selon la flèche A de la figure 4 ;

la figure 6 montre à plus grande échelle le montage de la rotule, et

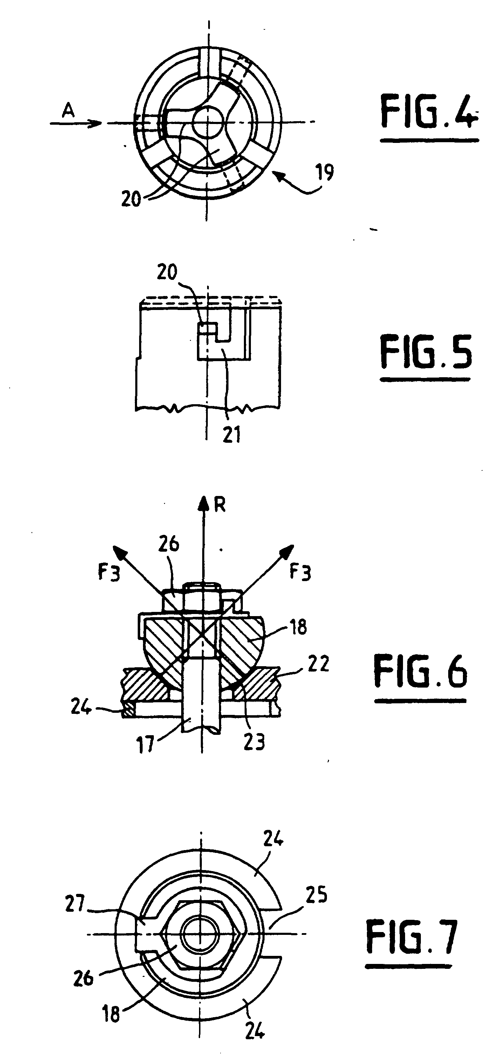

le figure 7 est une vue de dessus de la tête de rotule.

Les figures 1 et 2 montrent un montage classique d'un ressort 1 interposé entre un piston 2 monté coulissant dans un fourreau 3 et une pièce 4 solidaire du fourreau 3. Le point d'application de la résultante R des efforts appliqués par le ressort 1 sur la face d'appui du piston 2 est décalé d'une distance e du centre 0 de la face d'appui. D'autre part, la résultante R n'est pas perpendiculaire à la face d'appui et se décompose en une force latérale F1 et une force F parallèle à l'axe 5 du piston 2. Au centre 0 s'exerce un couple C = F x e qui a tendance à basculer le piston 2 dans l'alésage du fourreau 3.

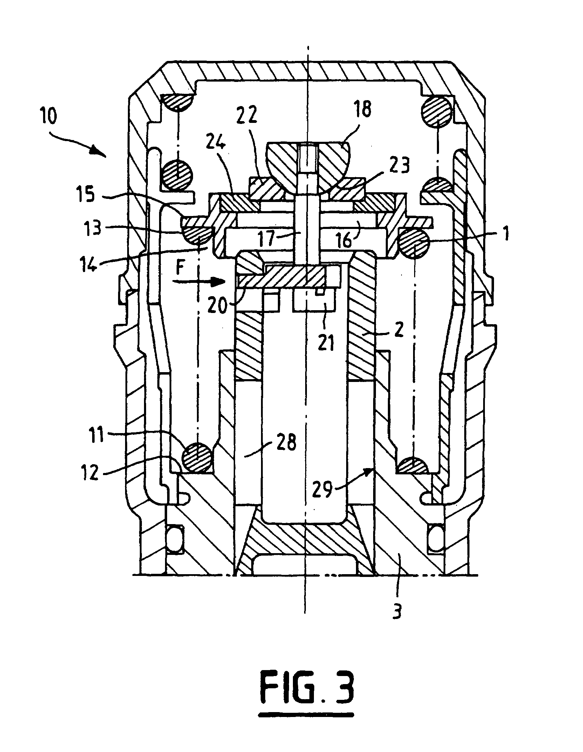

Les figures 3 à 7 montrent un système hydraulique de distribution de fluide 10 qui comporte un fourreau 3 et un piston 2 monté coulissant dans le fourreau 3. Un ressort hélicoïdal 1 est interposé entre le fourreau 3 et le piston 2, afin de régler des ouvertures de passage de fluide en fonction des pressions du fluide.

Comme on le voit clairement sur cette figure 3, la base inférieure 11 du ressort hélicoïdal 1 est en appui sur un épaulement 12 annulaire périphérique du fourreau 3, tandis que la base supérieure 13 loge dans une rainure 14 d'une coupelle annulaire 15.

La coupelle annulaire 15 présente dans sa partie centrale une ouverture 16 permettant le passage d'une tige 17 centrée dans l'axe du piston 2 et qui comporte à son extrémité supérieure une rotule mâle sphérique 18 et à son extrémité inférieure un dispositif de fixation 19 de la tige 17 sur le piston 2. Ce dispositif de fixation 19 comporte trois tenons 20 divergents régulièrement répartis autour de l'axe de la tige 17 dans un plan perpendiculaire à cet axe. Les trois tenons 20 pénètrent et se verrouillent dans trois encoches 21 ménagées dans la paroi du piston 2.

La liaison entre la coupelle annulaire 15 et la rotule mâle 18 est assurée par un anneau 22, qui présente une surface sphérique concave 23 en appui sur la surface périphérique inférieure de la rotule mâle 18, et une pièce de calage 24 interposée entre l'anneau 22 et la coupelle 15. Cette pièce de calage 24, de forme annulaire, comporte une échancrure 25 permettant le passage de la tige 17 et un logement annulaire pour centrer l'anneau 22. Elle est reçue et centrée dans un logement annulaire ménagée sur la face supérieure de la coupelle 15.

La rotule mâle 18 est fixée sur la tige 17 au moyen d'un écrou 26 et d'une rondelle de verrouillage 27.

La valeur de la tension de la force du ressort 1 est fonction de l'épaisseur de la pièce de calage 24. Grâce à l'échancrure 25, cette pièce de calage 24 peut facilement être remplacée sans démontage d'autres pièces. Il suffit de comprimer le ressort 1 en repoussant la coupelle 15 vers le bas et de faire glisser la pièce de calage 24. Le remontage d'une autre pièce de calage 24 se fait dans les mêmes conditions.

Le piston 2 coulisse dans le fourreau 3 sous l'action des forces antagonistes du ressort 1 et de la pression du fluide à l'intérieur du système hydraulique de distribution 10, afin de régler l'ouverture de lumières 28 ménagées dans la paroi du piston 2, en regard de la paroi intérieure 29 du fourreau 3.

Comme on le voit sur la figure 6, les forces élémentaires F3 exercées par l'anneau 22 sur la rotule mâle 18 sont perpendiculaires aux surfaces d'appui, et passent toutes par le centre de la surface sphérique de la rotule 18 qui se trouve dans l'axe de la tige 17. La résultante R est donc centrée sur l'axe de la tige 17.

**Revendications**

1.    Dispositif de rattrapage des défauts d'orientation de l'effort produit par un ressort hélicoïdal (1) dans un ensemble hydraulique de distribution de fluide comportant un fourreau (3) et un piston (2) monté coulissant dans ledit fourreau (3), ledit ressort (1) étant disposé coaxialement audit piston (2) et exerçant par ses bases (11, 13) des efforts sensiblement opposés respectivement sur ledit fourreau (3) et ledit piston (2), entre la base (13) du ressort hélicoïdal (1) agissant sur le piston (2) et le piston (2) une liaison rotulante sphérique (18, 23) centrée sur l'axe (7) du piston (2) étant prévue, la liaison rotulante comportant une rotule mâle (18) montée sur une tige (17) solidaire du piston (2) et un anneau (22) ayant une surface sphérique (23) en appui sur la surface périphérique de ladite rotule mâle (18) **caractérisé en ce que** ledit anneau (22) est monté sur ladite base (13) du ressort (1) au moyen d'une coupelle annulaire (15), formant le logement pour ladite base (13) du ressort hélicoïdal, et d'une pièce de calage (24), portant ledit anneau (22), pour le réglage de la précontrainte du ressort hélicoïdal (1).

**Patentansprüche**

1.    Voirichtung zum Ausgleichen von Kraftrichtungsfehlern einer Schraubenfeder (1) in einer hydraulischen Gesamtanordnung zur Verteilung von Flüssigkeit, die eine Gleithülse (3) und einen in dieser Gleithülse (3) gleitenden Kolben (2) aufweist, wobei diese Feder (1) koaxial zu diesem Kolben (2) angeordnet ist und mit ihren Basen (11, 13) auf diese Gleithülse (3) und diesen Kolben (2) im wesentlichen entgegengesetzte Kräfte ausübt, wobei zwischen der auf den Kolben (2) einwirkenden Basis (13) der Schraubenfeder (1) und dem Kolben (2) eine kugelförmige Gelenkverbindung (18, 23) vorgesehen ist, die auf der Achse (7) des Kolbens (2) zentriert ist, wobei die Kugelgelenkverbindung aus einer inneren Kugel (18), die auf einer mit dem Kolben (2) fest verbundenen Stange (17) sitzt, und einem Ring (22), dessen kugelförmige Oberfläche (23) an der Außenfläche dieser inneren Kugel (18) anliegt, besteht,

**dadurch gekennzeichnet,**

**dass** zur Einstellung der Vorspanning der Schraubenfeder (1) dieser Ring (22) an der genannten Basis (13) der Schraubenfeder (1) mittels eines ringförmigen Tellers (15), der die Aufnahme für diese Basis (13) der Schraubenfeder bildet, und eines Befestigungsteils (24), auf dem dieser Ring (22) sitzt, angebracht ist.

## Claims

1. A device to acommodate misalignment of the force produced by a helical spring (1) in a hydraulic fluid distribution system, comprising a sleeve (3) and a piston (2) slidingly mounted in said sleeve (3), said spring (1) being disposed coaxially of said piston (2) and applying by way of its ends (11, 13) substantially opposite forces to said sleeve (3) and said piston (2) respectively, between the end (13) of the helical spring (1) acting on the piston (2) and the piston (2), a swivelling ball joint (18, 23) which is centred on the axis (7) of the piston (2) being provided, the swivelling ball joint comprising a male swivel member (18) disposed on a rod (17) rigidly secured to the piston (2) and a ring (22) having a spherical surface (23) bearing on the peripheral surface of said male swivel member (18), **characterised in that** said ring (22) is mounted on said end (13) of the spring (1) by way of an annular cupule (15) receiving said end (13) of the helical spring (1) and by way of a shim member (24), carrying the ring (22), for adjustment of the prestressing of the helical spring (1).

EP 0 798 483 B1

FIG.1

FIG.2

# FIG. 3

FIG.4

FIG.5

FIG.6

FIG.7